# EUROPEAN PATENT APPLICATION

(11) **EP 4 649 804 A1**
(43) Date of publication of application: **19.11.2025**
(21) Application number: 25176156.5
(22) Date of filing: 13.05.2025
(51) Int. Cl.: A01C 7/04, A01C 7/20

(54) **SYSTEM AND METHOD FOR DELIVERING ORIENTED SEED**

(30) Priority: 17.05.2024 US 202463648876 P; 02.05.2025 US 202519197103
(71) Applicant: Deere & Company, Moline, IL 61265 (US)
(72) Inventor: Wonderlich, Grant J, Moline, 61265 (US); Wendt, Christopher W, Moline, 61265 (US); Sobotka, Cody J, Moline, 61265 (US)
(74) Representative: Reddie & Grose LLP

(57) **Abstract**

Techniques and/or systems are disclosed for depositing a seed in planting trough in a desired orientation. A system can be devised that receives a seed (350) from a seed meter (216), and deposits in the ground in the prepared orientation as received from the meter (216). A seed delivery assembly (300) comprises one or more belts (302, 302'), each with an inner portion that operably moves downward. The inner portion receives and engages with an oriented seed (350) delivered in a target orientation at the top portion (312) and translates the oriented seed (350) to the bottom portion (314), where it is ejected in the target orientation. A one or more powered rollers (304, 304') can be engaged with the one or more belts (302, 302') to provide rotational power for the translation. Further, one or more non-powered rollers (306, 306') or guides can be engaged with the one or more belts (302, 302') to provide tension to the one or more belts (302, 302') during translation.

## Description

### CROSS-REFERENCE TO RELATED APPLICATIONS

This application claims priority to U.S. Patent Application Serial No. 63/648,876, filed on May 17, 2024. The entirety of the aforementioned application is incorporated herein by reference.

### BACKGROUND

In an agricultural setting, crops are typically planted using large planting machines that open rows, deposit seeds, and close the row behind the seed. A series of planters can be used together in a row planter to plant several rows at each pass. Seeds are typically metered to a desired spacing to keep plants at a desired distance from each other for optimizing growth and production. A seed metering system can collect seeds from a storage hopper and send seeds to a planter at the desired intervals. However, many systems randomly drop seeds into an opened trough, without regard for orientation of the seed. Some seeds will produce healthier and more productive plants when deposited into the ground in a specific orientation.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for depositing a seed in planting trough in a desired orientation that provides for improved growth and productivity for the resulting plant. That is, seed orientation during planting can have an effect on resulting plant growth and overall plant production; therefore, placing the seed in the planting trough in the desired orientation is desirable. For example, orienting a seed in a tip (e.g., pedicle) down orientation, with flat sides oriented parallel to planting row may be a preferred orientation. A system can be devised that receives a seed from a seed meter, and deposits in the ground in the prepared orientation as received from the meter.

In one implementation, a seed delivery assembly for delivering an oriented seed for planting can comprise a top portion and a bottom portion. A first belt can comprise an inner portion that operably moves downward. The inner portion can be configured to receive and engage an oriented seed in a target orientation at the top portion and then translate the oriented seed to the bottom portion where it is ejected in the target orientation. A first powered roller is engaged with the first belt, and the powered roller drives the first belt translation. Further, a first non-powered roller or guide is engaged with the first belt, and the first guide provides tension to the first belt as it translates.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Fig. 1 is a component diagram illustrating one implementation of an example vehicle and system that may implement one or more systems and methods described herein.
Fig. 2 is a component diagram illustrating one implementation of one or more portions of an example portion of a row seeder wherein one or more systems described herein can be implemented.
Figs. 3A and 3B are component diagrams illustrating example implementations of one or more portions of seed dispensing assembly described herein.
Fig. 4A and 4B are component diagrams illustrating example implementations of one or more portions of a system described herein.
Fig. 5 is a component diagram illustrating an example implementation of an alternate design of a seed dispensing assembly.
Fig. 6 is a component diagram illustrating example implementations of one or more portions of one or more systems described herein.
Fig. 7 is a component diagram illustrating example implementations of one or more portions of one or more systems described herein.
Figs. 8A and 8B are component diagrams illustrating example implementations of one or more portions of a system utilized in a row planter.
Fig. 9 is a component diagram illustrating example implementations of one or more portions of one or more systems described herein.
Figs. 10A, 10B, 10C, 10D, and 10E are component diagrams illustrating an example embodiment of one or more portions of one or more systems described herein may be implemented.
Figs. 11A, 11B, 11C, 11D, and 11E are component diagrams illustrating an example embodiment of one or more portions of one or more systems described herein may be implemented.
Fig. 12 is a component diagram illustrating an example implementation of one or more portions of one or more systems described herein.
Fig. 13 illustrates an exemplary, non-limiting implementation of a seed delivery assembly according to various aspects.
Fig. 14 illustrates an exemplary, non-limiting implementation of a seed delivery assembly according to various aspects.
Fig. 15 illustrates an exemplary, non-limiting implementation of a seed delivery assembly according to various aspects.
Fig. 16 illustrates an exemplary, non-limiting implementation of a seed delivery assembly according to various aspects.

### DETAILED DESCRIPTION

The claimed subject matter is now described with reference to the drawings. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

As described herein, one or more systems and methods can be devised that provide for planting seeds in a furrow in a desired orientation. For example, it may be desirable to orient a seed with its pedicel (e.g., embryo or germ) down and, in the case of corn, with flat sides of the kernel oriented toward the sides of a furrow. Studies have shown improved seed germination and plant growth characteristics associated with seeds planted in this orientation. For a planting or seeding operation, seeds are typically stored in a storage vessel on a planter or seeder in a random orientation. The seeds are directed from storage to a row seeder via tubes and further directed toward a furrow created by the row seeder. Conventional implementations drop the seed randomly into the furrow and hope for the best. Various techniques and systems are described herein orient the seeds such that they are placed into the furrow in the desired orientation.

In one aspect, a seed metering apparatus (also referred to as a seed meter or seed metering device) is configured to receive a seed from storage (in a potentially random orientation) and output the in the desired orientation. A seed metering apparatus may singulate seeds (e.g., select seeds one at a time) and space the singulated seeds apart with a desired spacing (e.g., based on seeder speed, meter rate, etc.) for planting. In some implementations, the seed metering apparatus is configured to orient individual seeds such that when they are output in the desired orientation (e.g., pedicel down, flats to the side, etc.). When planted in the desired orientation, seeds typically germinate and/or emerge from the soil faster. In addition, the leaves of the crop are oriented to grow between rows instead of along the rows. Faster plant production (e.g., faster progress through germination, emergence, and growth) leads to healthier plants. Leaf orientation between rows allows for greater sun light on the leaves, while providing shade between rows to inhibit potential nuisance plants and to retain soil moisture.

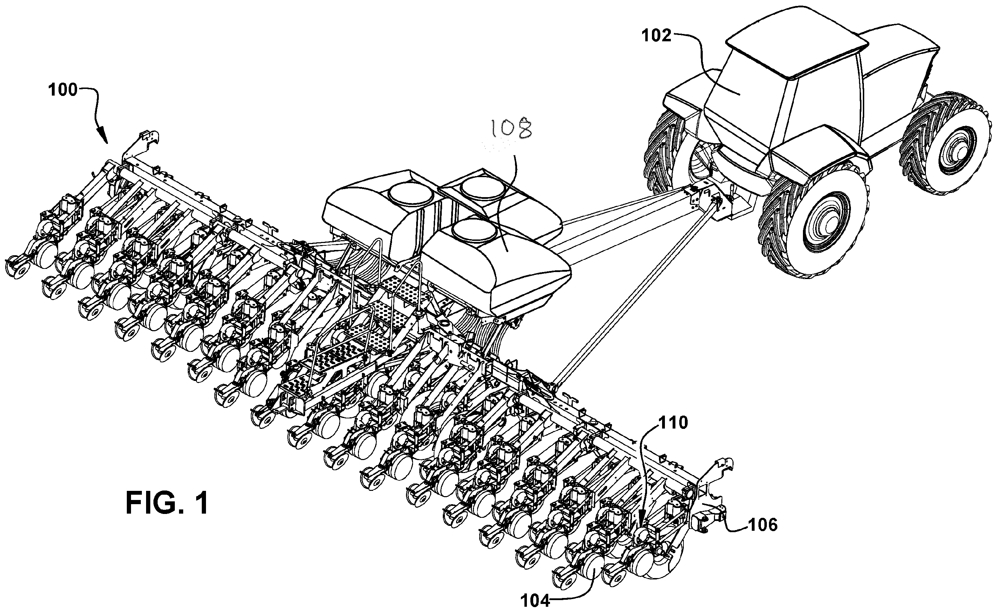

Turning now to the drawings, Fig. 1 illustrates an exemplary, non-limiting implementation of a work vehicle and associated equipment that may utilize the techniques and systems described herein. As shown in Fig. 1, an exemplary row crop planter 100 is pulled by a tractor 102 during operation. The row crop planter 100 includes a plurality of row seeders 104. In the exemplary implementation of Fig. 1, the plurality of row seeders 104 are arranged in parallel along a support bar 106. In other implementations, the plurality of row seeders may have a staggered arrangement. The row crop planter 100 also includes one or more seed storage vessels 108. Although Fig. 1 shows a single seed storage vessel 108, it is to be appreciated that, in other implementations, each row seeder 104 may include a separate seed storage vessel 108. As the row crop planter 100 is pulled across a field surface, each row seeder 104 opens a trench (or furrow), deposits a seed from the seed storage vessel 108 into the trench, and, in some cases, closes the trench. As a result, operation of the row crop planter 100 produces a series of generally parallel trenches that are each seeded with multiple seeds along the length of the trench. Further, the row crop planter may include one or more seed meters 110, like one described herein, which is disposed between the storage vessel 108 (e.g., either single bulk storage or individual, separate storage) and the row seeder 104 to meter individual seeds as appropriate for the operation.

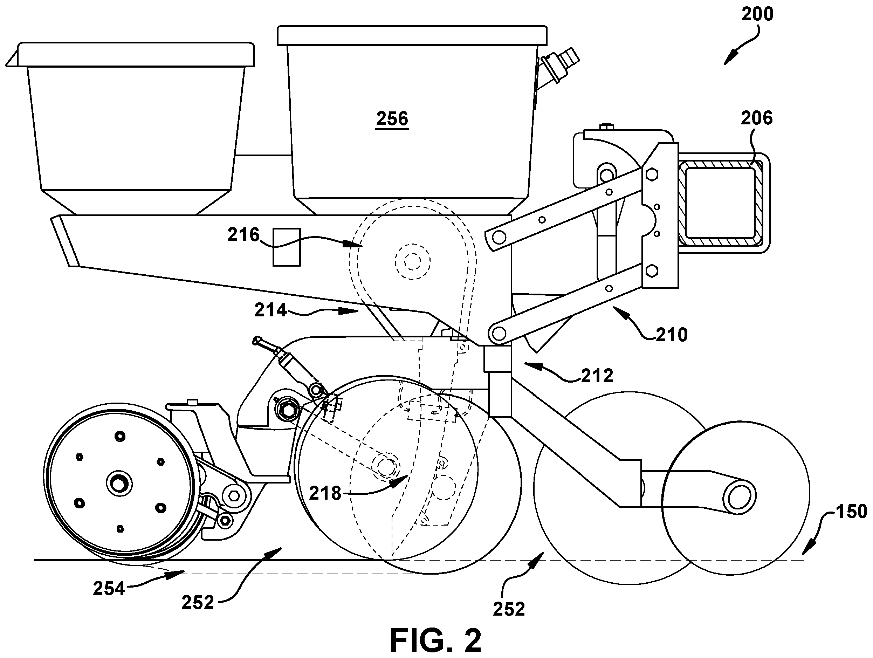

Fig. 2, with continued reference to Fig. 1, is a component diagram illustrating an exemplary, non-limiting implementation of a single row seeder unit 200 that may be part of a row crop planter, such as 100. In this example, the row seeder unit 200 may be one of the row seeders 104 in Fig. 1, although there are many different implementations, and this example is intended to illustrate a location or environment for the innovative concepts described herein. The row crop planter (e.g., 100) includes a support bar 206 (e.g., similar to support bar 106 of Fig. 1), which may be a frame configured to remain substantially stationary (e.g., from up and down and/or side to side movement) during operation.

As illustrated in Fig. 2, the row seeder unit 200 can be operably (e.g., during operation) engaged with the support bar 206 of a seeder implement (such as row crop planter 100). Further, the seeder unit 200 includes a movable frame 212 coupled by a linkage 210 to support bar 206. The movable frame 212 is configured to move (e.g., up and down) with linkage 210 during operation. The seeder unit 200 includes ground working tools 252 to open a furrow 254 in the ground 250, into which a seed is deposited, and subsequently close the furrow over the planted seed. In this example, the moveable frame 210 can be configured to move downward to drive the tools 252 into the ground to a desired depth, and to move upward to account for differing ground terrain and levels.

Additionally, the seeder unit 200 includes a seed selection and dispensing device 214, which may include a seed meter or seed dispenser 216 and a seed delivery assembly 218. The seed meter 216 is configured to singulate seeds supplied from a seed hopper 256 on seeder unit 220 or from storage 108 (see Fig. 1). In some implementations, seed meter 216 may further orient seeds in a desired orientation. The seed delivery assembly 218 delivers seed received from the seed meter 216 to the furrow 254. Seed delivery assembly 218, in some examples, may deliver seed to the furrow 254 in the orientation in which the seed is received from the seed meter 216. It is to be appreciated that seeder unit 200 is merely one example of a device for planting seeds. It is intended to be non-limiting and provided to illustrate an exemplary method and/or location for implementing the aspects of seed delivery systems and methods described herein.

As noted above, a technique may enable seeds to be dispensed, from a seed meter for example, in a desired orientation to achieve a particular planting position in the ground. For example, a pre-oriented seed may be delivered to a planting trough tip-down with the pedicel down and, in the case of corn, flats to the side of a furrow. With seeds planted in this configuration, the resultant plants can germinate and grow in a desired pose to encourage faster and more productive growth. For instance, studies suggest that corn seeds planted with their point down (e.g., pedicel directed downward) germinate and grow faster due to the orientation of the roots and cotyledons upon germination. Further, the first leaves of the corn plant tend to grow generally orthogonally from the flat sides of the seeds. Accordingly, if the seed flats are oriented to face perpendicular to a direction of the planting rows, the first leaves will also grow perpendicular to the row direction. Leaves covering the spaces between rows shade the empty space, which mitigates growth of unwanted plants (e.g., weeds) and improves moisture retention.

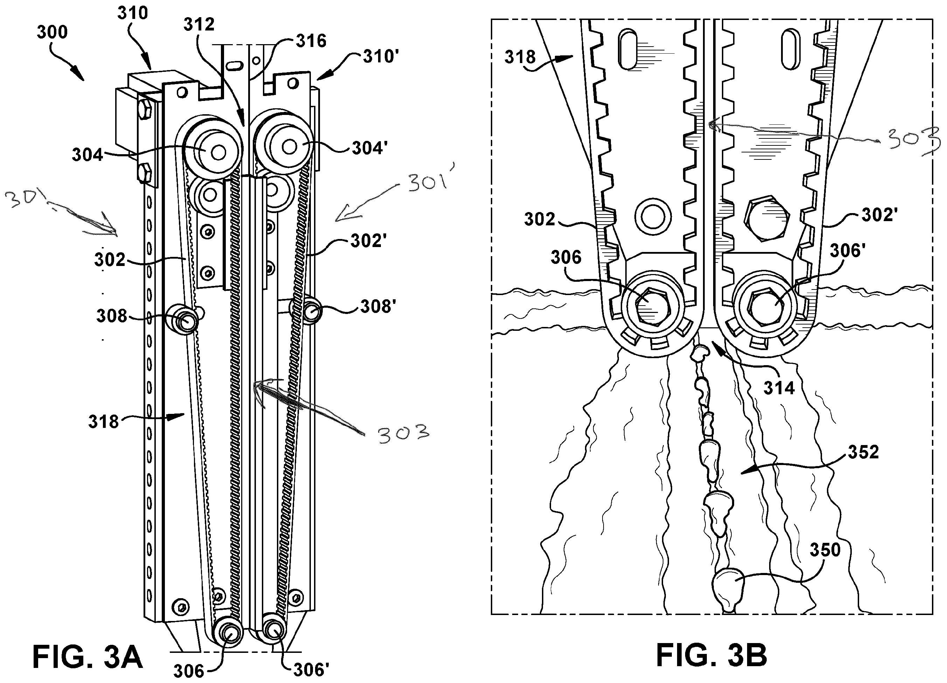

Figs. 3A and 3B are component diagrams illustrating one example implementation of a system or device 300 for delivering a seed from a seed dispenser to a planting furrow in the ground. In this exemplary, non-limiting implementation, the device 300 includes one or more belts 302, 302' (e.g., or chains, conveyors, or the like) translated by one or more powered rollers 304, 304' and held in place (e.g. tensioned) with one or more non-powered rollers 306, 306', guides 308, 308', or the like. As shown in Fig. 3A, belt 302, powered roller 304, non-powered roller 306, and guide 308 define a first side 301 of the seed delivery device 300. Similarly, belt 302', powered roller 304', non-powered roller 306', and guide 308' define a second side 301' of the seed delivery device 300. The first side 301 and the second side 301' are spaced apart to define a delivery channel 303 through which a seed travels to be deposited in the ground.

The powered rollers 304, 304' can rotate in opposite directions (e.g., 304 may rotate clockwise and 304' may rotate counterclockwise) at a similar rate to translate an inner portion of the belts 302, 302' in a downward direction, from top to bottom. In other words, the translation of belts 302, 302' downward in the channel 303 downwardly conveys a seed disposed therein. The powered rollers 304, 304' can be powered by one or more controllable motors 310, 310', which may be controlled by a controller (not shown) comprising a processor and memory for storing instructions to control the motors. For example, the controller can provide a signal to the one or more motors 310, 310' that sets a speed of rotation for the powered rollers 304, 304' based on a desired rate of seed dispensing or seed exit velocity. Optimal seed exit velocity may vary based on soil conditions and other factors. In this example, the controller may set the speed of each motor 310, 310' at substantially the same speed, such that the seed 350 is translated down, between the belts 302, 302' appropriately. As another example, respective motors 310, 310' can each be controlled by a separate controller. Further to this example, in some implementations, speed synchronization of the respective motors may be controlled by a third controller. Regardless of the number of controllers and/or motors, the speed of the belts 302, 302' may be synchronized to avoid shearing on the seed in channel 303, which provides for maintenance of the orientation of the seed (e.g. in a desired orientation) and appropriate ejection of the seed downwardly (e.g., instead of to one side, which may alter the desired orientation of the seed).

According to one example, the belts 302, 302' receive a seed 350 at a top portion 312 of a delivery assembly 318. The seed 350 may be received via a chute 316 that leads from a seed meter to the top portion 312. At the top portion 312, the seed 350 is engaged by the translating belts 302, 302' and fed into channel 303. The belts 302, 302' can deliver the seed 350 to a bottom portion 314 of the delivery assembly 318, where it is dispensed to the ground. The belts 302, 302' securely retain the seed 305 in the channel 303. Accordingly, the seed 350 maintains an orientation from the seed meter to the trough or furrow 352 in the ground. In this way, the desired orientation for the planted seed 350 can be obtained, thereby improving potential crop growth and health.

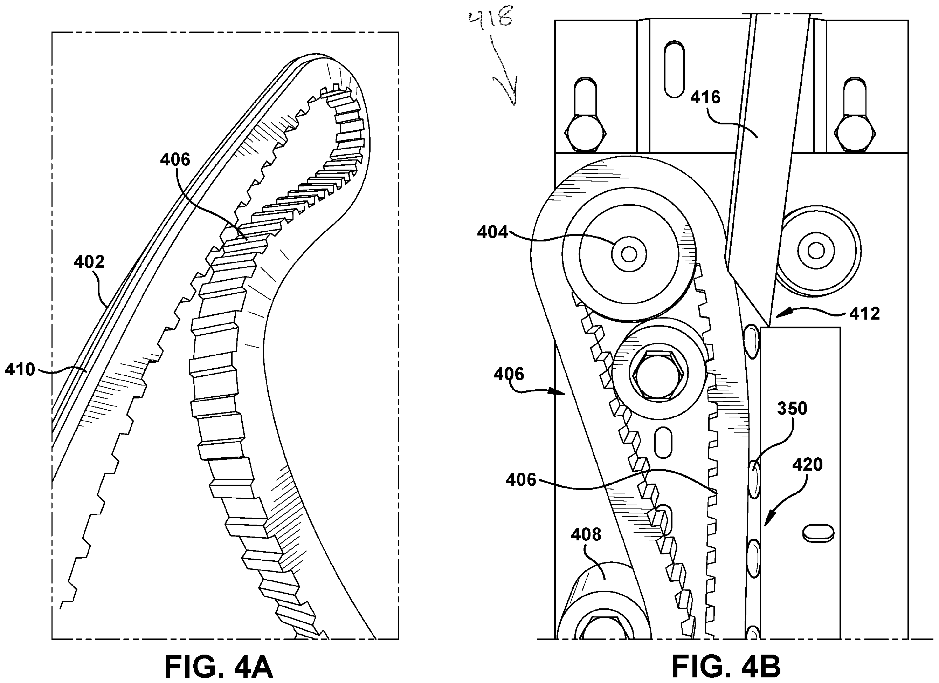

As illustrated in Figs. 4A and 4B, a belt 402 includes a plurality of teeth 406 (e.g. on an inner surface thereof) that may operably engage with complementary teeth on the powered roller 404. This engagement can help translate the belt while mitigating slippage. Further, an outer surface of the belt 402 can include a groove 410 configured to receive the seed 350 to operably hold the seed in the desired orientation while moving the seed 350 down the delivery assembly 418. For example, the groove 410 may have a width that corresponds to a width of the seed 350 when positioned in the target or desired orientation. The belt 402 can hold the seed in the target or desired orientation during translation to maintain that position until the seed 350 dispensed to the ground. In some implementations, the outer surface of the belt 402 can include pre-formed cells that are shaped and sized to receive seed 350 in a desired orientation and maintain the orientation during translation from the top portion 412 to the bottom portion.

In the exemplary implementation of Figs. 4A and 4B, the delivery assembly 418 includes one belt 402, powered by one powered roller 404. Further, in place of an opposing belt (e.g. belt 302' of delivery assembly 318 described above), the delivery assembly 418 includes a dispensing wall 420 along which the seed 350 can travel as it is held and translated by the belt 402. The belt 402 is guided by one or more guides 408 and non-powered rollers (not-shown) and translates the seed 350 when received at a top portion 412 via a chute 416 from a seed meter. The belt 402 delivers the seed 350 to the ground at the bottom portion (not shown) of the delivery assembly 418.

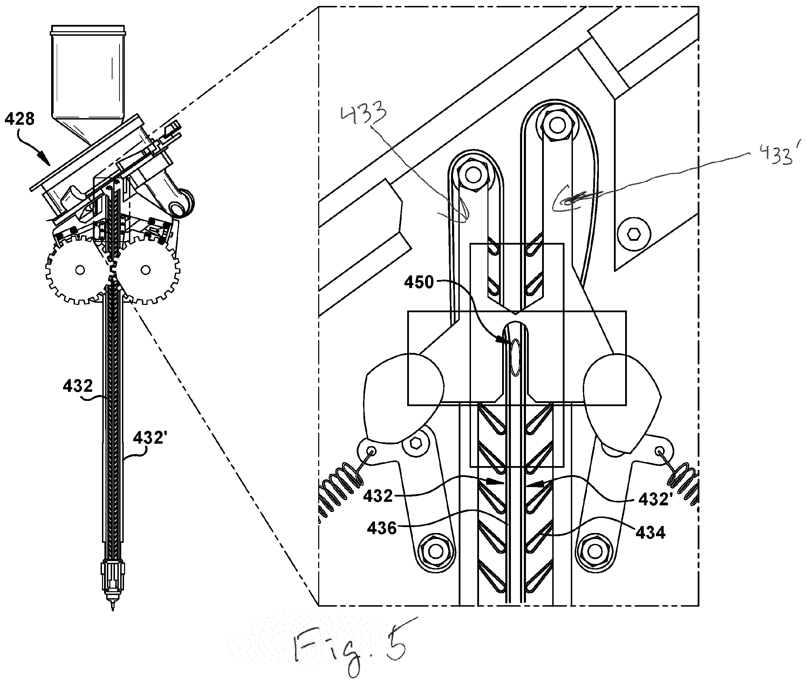

Fig. 5 is a component diagram illustrating an example alternate design of a seed delivery assembly 428. Assembly 428 includes a pair of belts 432, 432'. For example, in order to accommodate differently dimensioned seeds 450 (e.g., seeds of different sizes, widths, etc.), the belts 432, 432' should be able to automatically conformed to the seed dimension, regardless of the size. In this implementation, the belts 432, 432' can be designed with conformal nature that allows it to adjust. As illustrated, in this example, the respective belts 432, 432' travel along respective rails 433, 433' that include finger-like protrusions 434 extending therefrom (e.g. in a cantilevered position). The protrusions 434 contact inner surface 436 of the belts 432, 432' as shown in Fig. 5. The protrusions 434 are directed downward and are deformable. In particular, protrusions 434 may deflect downward and toward the rails 433, 433' form which the protrusions 434 extend. The protrusions 434 provide an appropriate amount of bias to the inner portion 436 of the belts 432, 432', while being deformable to conform to different sized seeds 450. The belts 432, 432' deform inward and outward to capture each seed 450 while providing a sufficient compression force on seed 450 to hold the seed 450 between belts 432, 432' during delivery to the ground.

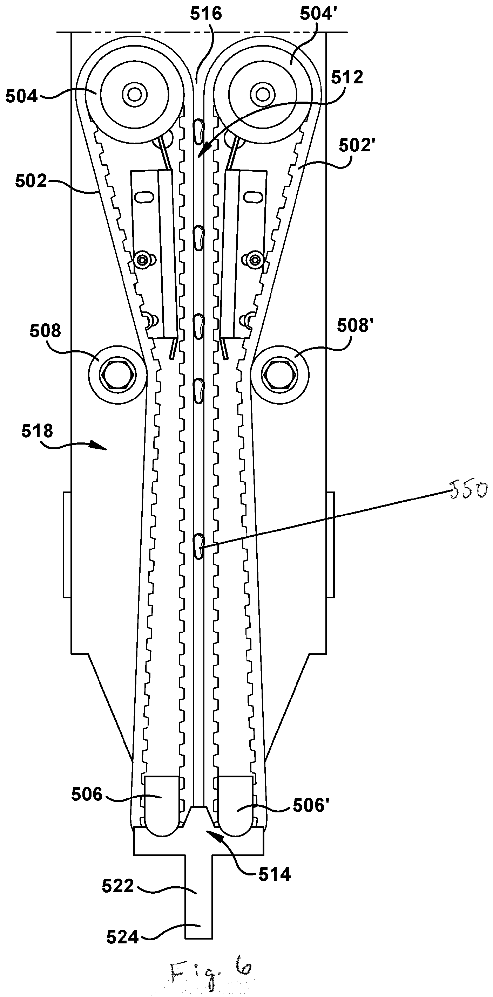

Fig. 6 illustrates another exemplary, non-limiting implementation of a seed delivery device. Fig. 6 depicts a delivery assembly 518 having a pair of belts 502, 502', a pair of powered rollers 504, 504', a pair of non-powered rollers 506, 506', and a pair of guides 508, 508'. A chute 516 dispenses the seed 550 to a top portion 512 of the delivery assembly 518 in a desired orientation. For example, chute 516 may couple to or interact with a seed meter. The seed meter outputs a seed (e.g. in the desired orientation in some implementations), which travels via the chute 516 to the delivery assembly 518 for delivery to the ground. In this exemplary implementation, a dispensing guide 522 is disposed at a bottom portion 514 of the delivery assembly 518. The dispensing guide 522 is configured to maintain the target orientation of the seed 550 (e.g., point down, flats perpendicular to the row) as the seed 550 travels from the bottom portion 514 into the furrow (e.g. 352 of Fig. 3B). In this implementation, the dispensing guide 522 mitigates misorientation of the seed 550 as it is ejected from the belts 502, 502'. For instance, misorientation may result if belt speed is not properly aligned or synchronized. That is, for example, if one belt is translating at a different speed than the other belt, the seed can be ejected at an angle or with spin from the bottom portion 514 instead of directly down into the furrow. As such, the dispensing guide 522 includes a channel 524 configured to hold the seed in the desired orientation all the way down into the furrow.

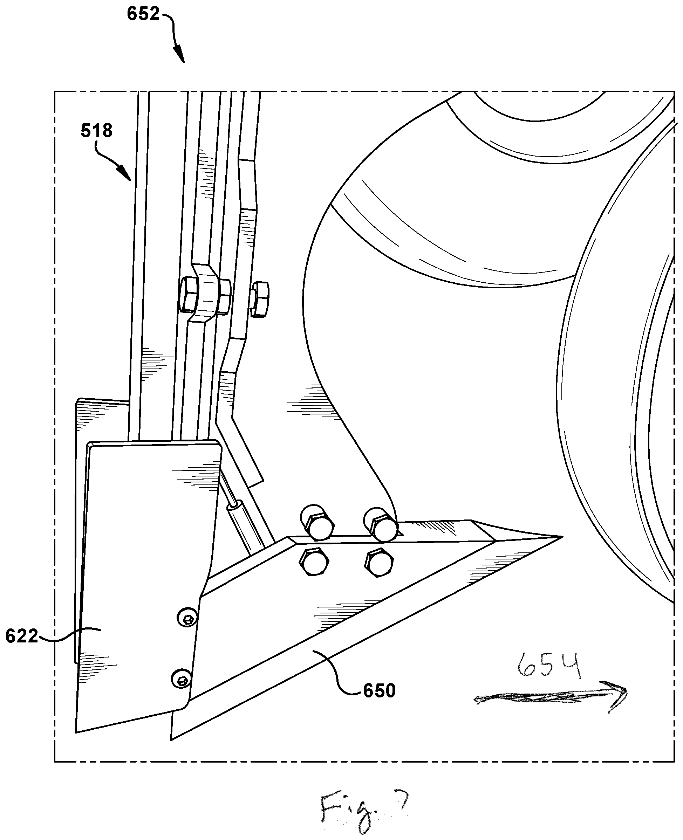

Fig. 7 illustrates exemplary, non-limiting use of delivery assembly 518. In this example, a planting assembly 652 (e.g., as a portion of the planter system 100) can include a furrow opener 650 that is configured to open a planting furrow immediately prior to planting the seed. Accordingly, furrow opener 650 is disposed in front of delivery assembly 518 relative to a direction of travel 654. In this example, the dispensing guide522 described above is disposed at a terminal (e.g. ground proximate) portion of the delivery assembly 518 to deposit the seed in the desired orientation. In Fig. 7, the dispensing guide 522 is obscured by protective shield 622. As the furrow opener 650 opens a furrow in the ground, the dispensing guide 522 can deposit the seed from the delivery assembly 518 directly into the furrow in the desired orientation. It should be appreciated that a variety of alternate types of delivery assemblies are envisioned where the seed is received from the belts and delivered to the furrow in the same orientation as received.

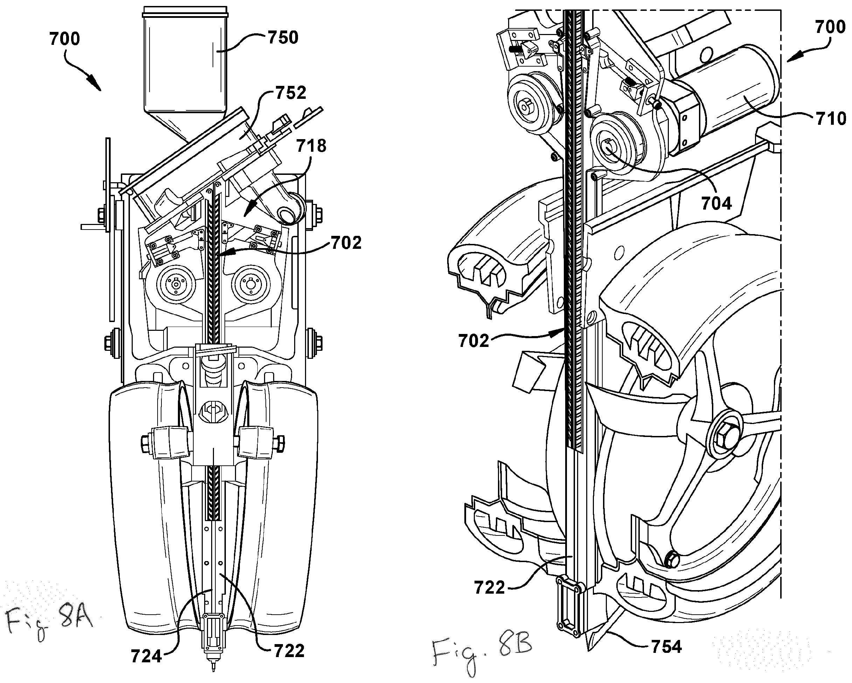

Figs. 8A and 8B illustrate one example implementation where the techniques and systems described herein can be employed. A planting assembly 700 is depicted, which may be part of a larger row crop planter, such as one of the row seeders 104 of the crop planter 100 of Fig. 1 or a portion of the row seeder unit 200 of Fig. 2. In this implementation, the planting assembly 700 includes a seed hopper 750 (e.g., one or more hoppers) in which seed for planting is disposed. The seed hopper 750 is coupled with a seed metering device 752, which receives the seeds from the hopper 750, meters the seeds into individual seeds, orients the individual seeds into the target or desired orientation (in some examples), and dispenses each individual and oriented seed to the delivery assembly 718 (e.g., via a chute). Each oriented seed is translated down by belts 702 to a seed dispensing guide 722 having a seed channel 724. The belts 702, in an example, are driven by powered roller(s) 704, which are powered by a motor 710. A furrow opener 754 is disposed in front of the dispensing guide 722 (e.g. relative to a direction of travel) to open a furrow into which the individual, oriented seeds are deposited. After deposition, a furrow closer (not shown) closes the furrow to complete the planting of the oriented seed.

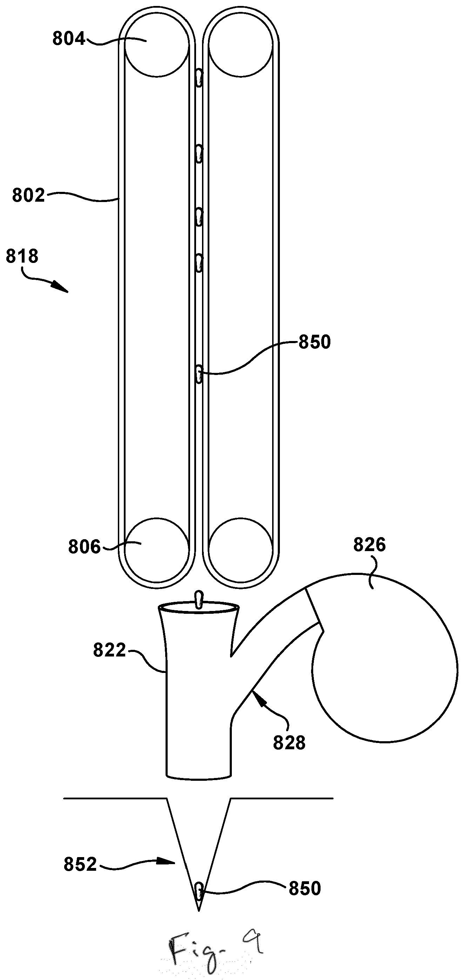

Fig. 9 illustrates another exemplary, non-limiting implementation of various portions of a seed delivery assembly 818. In this example, the delivery assembly 818 includes belt(s) 802, powered roller(s) 804, non-powered roller(s) 806, and a seed dispensing guide 822. In this implementation, the seed dispensing guide 822 includes an air source 826, such as a fan or compressed air, that is fluidly coupled with the dispensing guide 822 through a port 828. As an example, a seed 850 translates down the delivery assembly 818 and is ejected to the dispensing guide 822. In one implementation, pressurized air is directed through the port 828 from the air source 826 generally downward, which is configured to engage with the falling seed 850 and accelerate the seed 850 into the furrow 852 in the desired orientation. For example, the application of the pressurized air in the downward direction essentially forces the seed 850 into the furrow 852 quickly, to mitigate potential mis-orientation, such as through tumbling or mis-ejection from the delivery assembly 818.

Fig. 9 illustrates how air could be used to accelerate a seed 850 to a preferred velocity after exiting the delivery assembly 818, but before the seed 850 hits the soil in the furrow 852. Alternately, in some implementations, a powered wheel could be used to create a similar effect. That is, for example, a wheel, gear or the like can be disposed at the position of the air source 826 and port 828, at or near the dispensing guide 822. According to this example, the wheel can be spinning at a preset speed to provide the acceleration to the seed 850, much like the air jet described above.

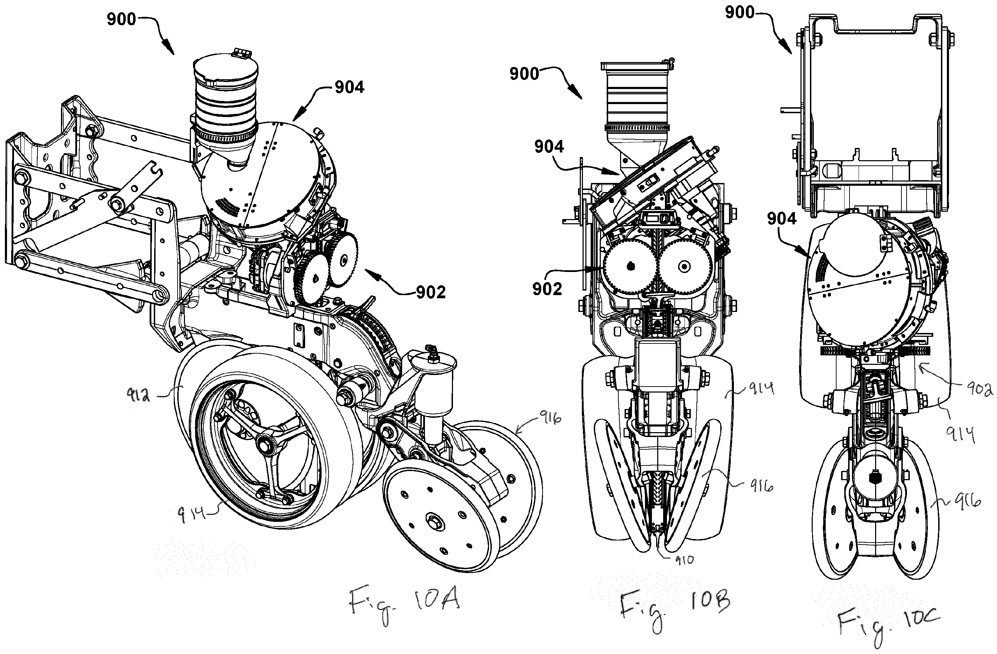

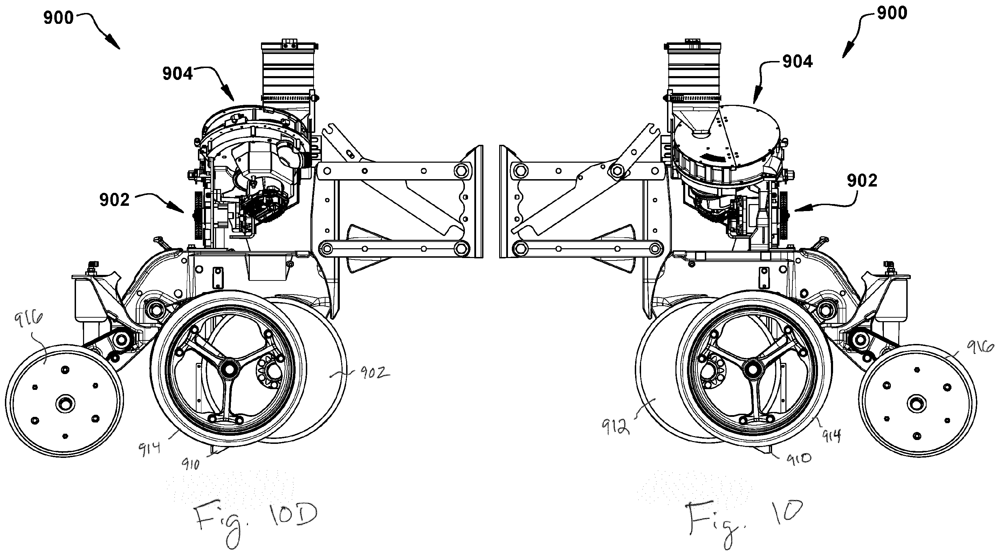

Fig. 10A-10E depict various views of an exemplary, non-limiting implementation of a row unit 900 on which a seed delivery assembly 902 may be deployed. Seed delivery assembly 902 receives a seed from a seed dispensing assembly 904 and delivers the seed for deposition in the ground. Seed delivery assembly 902, in some examples, is an alternate implementation of seed dispenser 218, dispensing assembly 318, dispensing assembly 418, dispensing assembly 518, dispensing assembly 718 and/or dispensing assembly 818. Further, seed delivery assembly 902 may incorporate or be utilized in connection with features and techniques described above with respect to those exemplary implementations.

As shown in Figs. 10A-10E, the row unit 900 includes an opener disc 912, a gauge wheel 914, and closing wheel 916. The opener disc 912 cuts an opening into the ground into which a seed is deposited with seed delivery assembly 902. The gauge wheel 914 ensures the opener disc 912 creates an opening having a desired depth for the seed. The closing wheel 916 covers the opening after the seed have been deposited therein. Figs. 10B, 10D, and 10E further depict a furrow opener 910, which may operate with or replace opener disc 912. Furrow opener 910 may create a furrow for the seed and may be positioned at a ground-proximate end of the seed delivery assembly 902. Furrow opener 910 may be positioned just before (e.g. in a traveling direction) a location at which seed exits the seed delivery assembly 902.

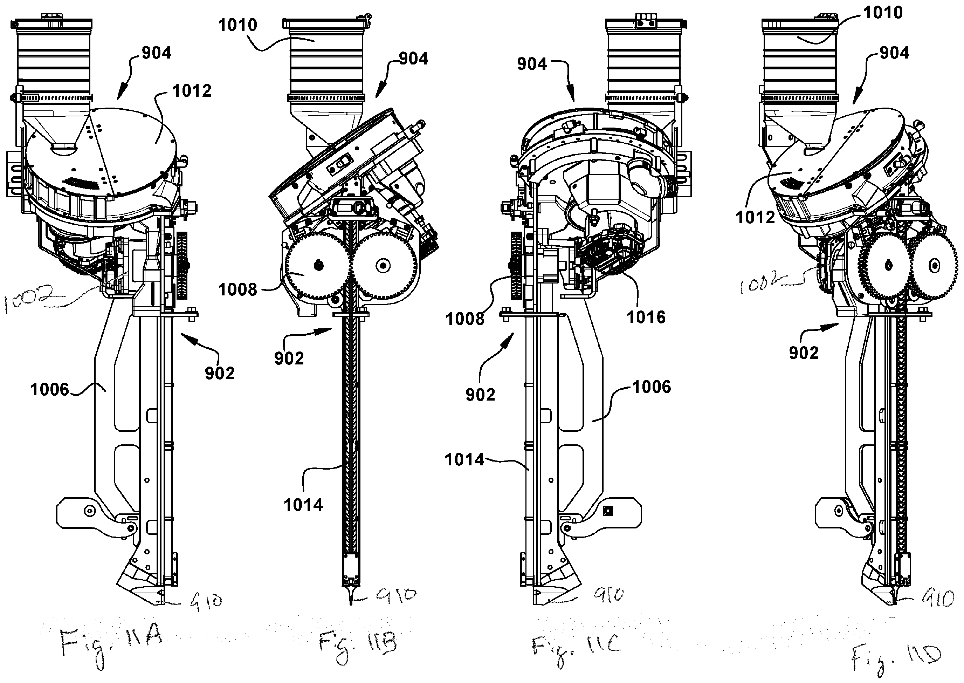

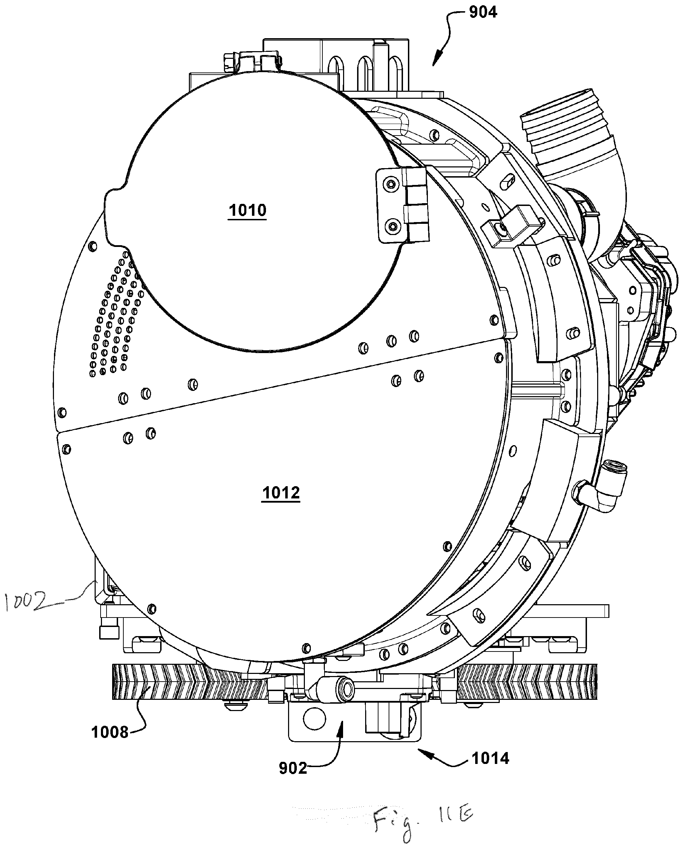

Figs. 11A-11E depict a seed dispensing assembly 904 and a seed delivery assembly 902 separate from the row unit 900. As shown, seed dispensing assembly 904 includes a hopper 1010 and a seed meter 1012. In some implementations, the seed meter 1012 can orient and dispense a seed in a desired orientation such as, but not limited to, a tip-down orientation with flat portions of the seed oriented to be facing a furrow wall once deposited. As shown in Figs. 11A-11D, a frame 1006 supports the seed dispensing assembly 904 and the seed delivery assembly 902. The frame 1006 further facilitates attachment of the seed delivery assembly 902 and seed dispensing assembly 904 to row unit 900. The seed delivery assembly 902 includes a seed delivery channel 1014 through which a seed, received from seed meter 1012 in a desired orientation, travels before being deposited into a furrow opened in the ground by furrow opener 910 or opener disc 912. The seed delivery channel 1014 maintains the seed in the desired orientation.

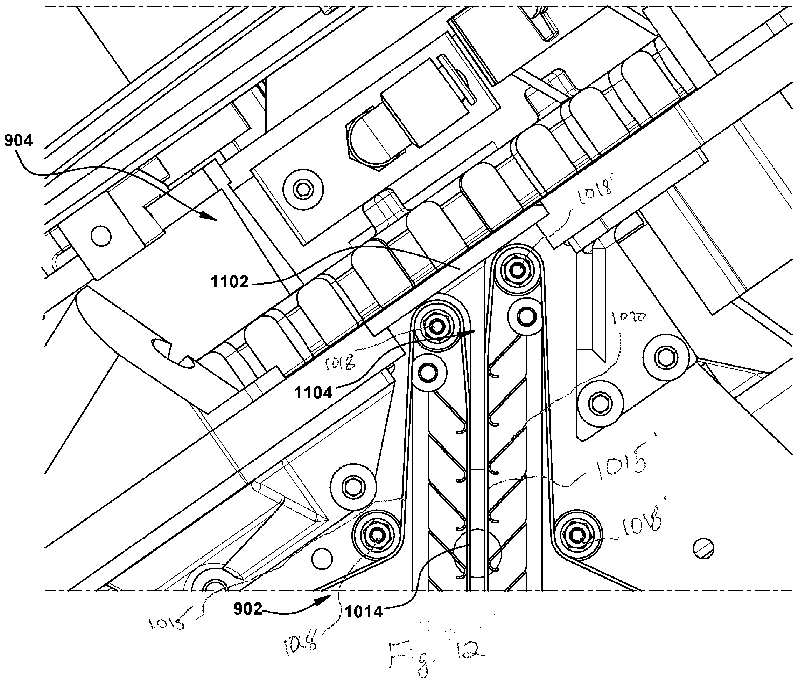

The seed delivery channel 1018 may be partially formed by belts of the seed delivery assembly 902, such as belts 1015, 1015' shown in Fig. 12. In one implementation, the belts may be supported in tension by rollers and the seed delivery channel 1014 is formed between the belts. Powered rollers 1008 coupled to motor 1002 cause the belts to move. In particular, the belts, in the portion defining the seed delivery channel 1014, travel in a downward direction from the seed meter 1012 to the ground, which is proximate to furrow opener 910 during operation. In an example, seed is supplied to seed meter 1012 from hopper 1010 (or storage 108 of Fig. 1). Seed meter 1012 singulates the seed and, in some implementations, orients the seed. In this process, a device in seed meter 1012 rotates. Motor 1016 is coupled to the device in seed meter 1012 to effect the rotation.

Fig. 12 depicts a portion of the system where the seed dispensing assembly 904 (and, particularly, the seed meter 1012) interacts with the seed delivery assembly 902. As shown in Fig. 12, the seed delivery channel 1014 is defined by rails 1017, 1017'. Particularly, rails 1017, 1017' are spaced apart, as shown, with seed delivery channel 1014 defined therebetween. Belts 1015, 1015' run through channel 1014 and around rails 1017, 1017' in a loop. One or more guides or rollers 1018, 1018', along with the rails 1017, 1017' define the path through which the belts 1015, 1015' are driven to carry seed. Belts 1015, 1015', as described above, engage a seed dispensed from seed meter 1012 and hold the seed as the seed is delivered to the ground. As shown in Fig. 12, protrusions 1020 are provided on an inner surface of rails 1017, 1017' and contact an inner surface (non-seed engaging surface) of the belts 1015, 1015'. The protrusions 1020 are directed generally downward and are deformable. In particular, protrusions 1020 may deflect downward and toward the rails 1017, 1017' as a seed passes. The protrusions 1020 provide an appropriate amount of bias to the inner portion of the belts 1015, 1015', while being deformable to conform to different sized seeds.

At a top portion of the belts 1015, 1015' is a seed receiving location 1104 where a seed is deposited from the seed meter 1012 (e.g. in a desired orientation such as tip-down) via a chute 1102. According to various aspects, the belts 1015, 1015' are arranged relative to seed meter 1012 to maintain seed orientation. For example, as shown in Fig. 12, the left belt 1015 is positioned lower than the right belt 1015' at the seed receiving location 1104. Chute 1102, in an aspect, aligns with a top of seed delivery channel 1014. When a seed drops through chute 1102, the seed is caught by the belts 1015, 1015' at the seed receiving location 1104 and conveyed downward to the ground for deposition into a furrow.

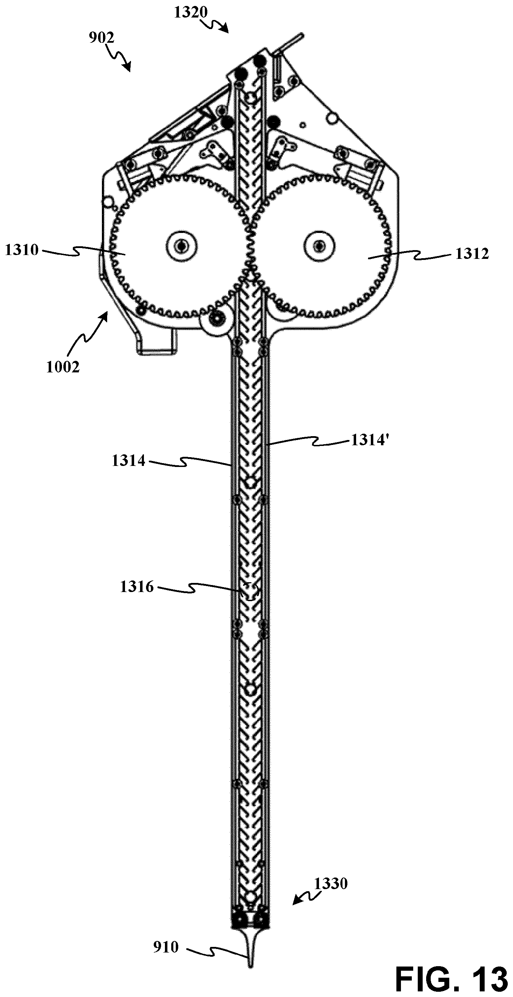

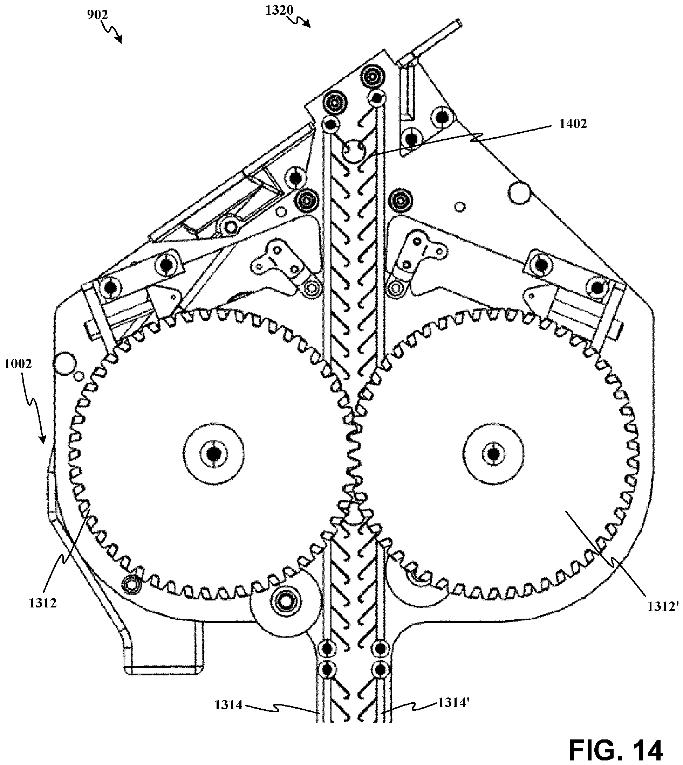

Turning now to Figs. 13-16, various aspects of seed delivery assembly 902 are illustrated. Seed delivery assembly 902 includes a first rail 1314 and a second rail 1314' extending from a top portion 1320 to a bottom portion 1330. In an example, the top portion 1320 is proximate to seed dispensing assembly 904 and the bottom portion 1330 is proximate to and/or engages with the ground. The rails 1314, 1314' have a spaced arrangement to define a seed delivery channel 1316 via which a seed travels from seed dispensing assembly 904 to the ground. As shown in Fig. 12, belts travel generally around rails 1314, 1314' and, particularly, down channel 1316 to engage a seed as the seed travels to the ground. As shown in Fig. 14, rails 1314, 1314' have a plurality of cantilevered protrusions 1402 that extend thereform. In particular, protrusions 1402 extend from an inner surface of rails 1314, 1314', where the inner surface is the channel-facing surface of rails 1314, 1314'. Protrusions 1402 are similar to protrusions 1020 and protrusions 434 described above. Accordingly, protrusions 1402 are directed generally downward and are deformable. Protrusions 1402 deflect more downward and toward the rails 1314, 1314' as a seed passes.

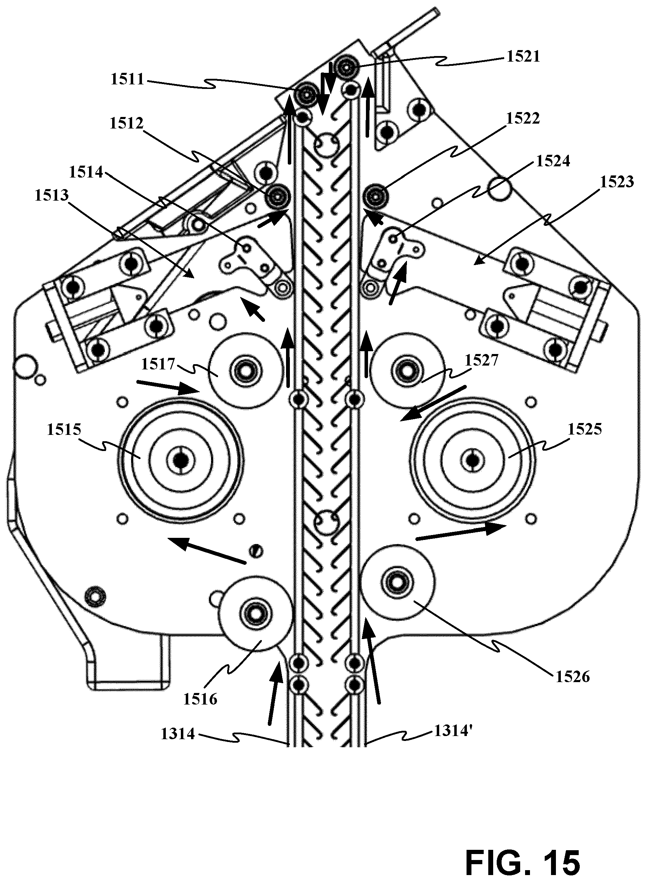

Seed delivery assembly 902 includes first gear 1310 and second gear 1312 as shown in Figs. 13 and 14. First gear 1310 and second gear 1312 engage with each other such that rotation of one gear effects rotation of the other gear. In one implementation, motor 1002 can drive first gear 1310, which subsequently drives second gear 1312 in the opposite direction. In other implementations, a motor drives second gear 1312, which subsequently drives first gear 1310. Still further, both first gear 1310 and second gear 1312 can be driven by respective motors. The first gear 1310 and second gear 1312 can be coupled to respective rollers 1515 and 1525 (see Fig. 15). Roller 1515, for instance, may be coupled to motor 1002 and driven thereby. Roller 1525 is driven in a complementary fashion through interaction of first gear 1310 and second gear 1312. Rollers 1515 and 1525 engage with respective belts (e.g. belts 1015, 1015') such that rotation of rollers 151 and 1525 results in translation of the respective belts along respective belt routes.

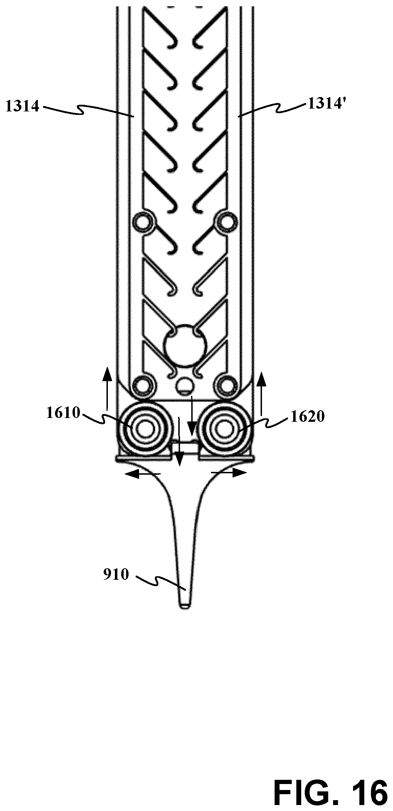

Turning to Fig. 15, respective belt paths for the two sides of the top portion 1320 of the seed delivery assembly 902 are depicted. Fig. 16 depicts respective belt paths for the two sides of the bottom portion 1330 of the seed delivery assembly 902. Specifically, the arrow indicate a general direction of the belts. It is to be appreciated that the arrows in Fig. 15 may not perfectly align with an actual route of the belts. Rather, the arrows indicate a relative direction of travel for the belt relative to other components described herein.

For the purpose of Figs. 15 and 16, the terms "inside" or "inside of" relate to a side or portion of a component disposed nearest to or facing seed delivery channel 1316 and the terms "outside" or "outside of" relate to a side or portion of a component disposed farthest from or facing away from seed delivery channel 1316. Starting with the left side of the seed delivery assembly 902, associated with rail 1314, a first belt (e.g. belt 1015) may run around a roller or guide 1511. Here, the belt may run over or on top of roller 1511, such that the belt runs up the left side of roller 1511, over the top, and subsequently down the inside of rail 1314 (along protrusions 1402, for example) to the bottom portion 1330. At the bottom portion, shown in Fig. 16, the first belt runs along the inside portion of roller 1610, around the bottom thereof, and then up the left side of the roller 1610. Here, the first belt continues to run along the outside of rail 1314 back up to the top portion 1320. Referring back to Fig. 15, the first belt returning from the bottom portion 1330 travels between the outside of rail 1314 and the inside of roller 1516. After roller 1516, the first belt travels around an outside of roller 1515 (which may be powered by motor 1002 in some examples) and then to the inside of roller 1517 between roller 1517 and the rail 1314. The first belt travels along an outside of a guide 1514. Guide 1514 is coupled to a tensioner 1513 that operates to maintain tension of the belt by, for example, imparting a pulling force on the first belt to pull the first belt away from the rail 1314. The tensioner 1513 may include a spring (not shown) or other biasing member to generate the tensioning (pulling) force. After the guide 1514, the first belt travels around the inside of roller 1512 (e.g. between the roller 1512 and rail 1314) before returning back to roller 1511.

Moving to the right side of the seed delivery assembly 902, associated with rail 1314', a second belt (e.g. belt 1015') may run around a roller or guide 1521. Here, the second belt may run over or on top of roller 1521, such that the belt runs up the right side of roller 1521, over the top, and subsequently down the inside of rail 1314' (along protrusions 1402, for example) to the bottom portion 1330. At the bottom portion, shown in Fig. 16, the second belt runs along the inside portion of roller 1620, around the bottom thereof, and then up the right side of the roller 1620. Here, the second belt continues to run along the outside of rail 1314' back up to the top portion 1320. Referring back to Fig. 15, the second belt returning from the bottom portion 1330 travels between the outside of rail 1314' and the inside of roller 1526. After roller 1526, the second belt travels around an outside of roller 1525 (which may be rotated via gear 1312' in some examples) and then to the inside of roller 1527 between roller 1527 and the rail 1314'. The second belt travels along an outside of a guide 1524. Guide 1524 is coupled to a tensioner 1523 that operates to maintain tension of the second belt by, for example, imparting a pulling force on the second belt to pull the second belt away from the rail 1314'. The tensioner 1523 may include a spring (not shown) or other biasing member to generate the tensioning (pulling) force. After the guide 1524, the second belt travels around the inside of roller 1522 (e.g. between the roller 1522 and rail 1314') before returning back to roller 1521.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Terms of orientation used herein, such as "top," "bottom," "horizontal," "vertical," "longitudinal," "lateral," and "end" are used in the context of the illustrated embodiment. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures, but can encompass structures that are reasonably close approximations.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the non-exclusive embodiments and examples that are illustrated and described in this disclosure, or that are discussed during the prosecution of the application.

Although systems and methods for seed dispensing and/or delivery have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for seed dispensing and/or delivery. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, subcombinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication.

The ranges disclosed herein also encompass any and all overlap, subranges, and combinations thereof. Language such as "up to,'' "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

In summary, various embodiments and examples of systems and methods for seed dispensing and/or delivery have been disclosed. Although the systems and methods for seed dispensing and/or delivery have been disclosed in the context of those embodiments and examples, this disclosure extends beyond the specifically disclosed embodiments to other alternative embodiments and/or other uses of the embodiments, as well as to certain modifications and equivalents thereof. This disclosure expressly contemplates that various features and aspects of the disclosed embodiments can be combined with, or substituted for, one another. Thus, the scope of this disclosure should not be limited by the particular disclosed embodiments described herein, but should be determined only by a fair reading of the claims that follow.
Embodiments of the invention can be described with reference to the following numbered clauses, with preferred features laid out in dependent clauses:
1. A seed delivery assembly for delivering an oriented seed for planting, comprising:
   a top portion and a bottom portion;
   a first belt comprising an inner portion operably moving downward, the inner portion operably configured to receive and engage an oriented seed in a target orientation at the top portion and translate the oriented seed to the bottom portion where it is ejected in the target orientation;
   a first powered roller engaged with the first belt, the powered roller driving the first belt translation; and
   a first non-powered roller or guide engaged with the first belt and operably providing tension to the first belt as it translates.
2. The assembly of clause 1, comprising a second belt comprising an inner portion operably moving downward, the inner portion of the first belt proximate the inner portion of the second belt such that the oriented seed is received and held between the first belt and second belt as the oriented seed is translated to the bottom portion.
3. The assembly of clause 2, comprising a second powered roller engaged with the second belt, the second powered roller driving the belt translation of the second belt; and comprising a second non-powered roller or guide engaged with the second belt and operably providing tension to the second belt as it translates.
4. The assembly of clause 3, wherein the first powered roller and the second powered roller rotate in opposite directions, and rotate at substantially a same speed.
5. The assembly of clause 2, the first and second belts respectively self-conforming to automatically adjust to seeds having different size dimensions.
6. The assembly of clause 1, comprising a dispensing wall adjacent to the inner portion of the first belt such that the seed is received and held between the first belt and dispensing wall as the seed is translated to the bottom portion.
7. The assembly of clause 1, the first belt comprising a groove disposed along a central line of the first belt, the groove configured to receive at least a portion the seed to hold the oriented seed during translation to the bottom portion.
8. The assembly of clause 1, comprising a chute disposed above the top portion, the chute configured to operably receive the oriented seed from a seed meter and deliver the oriented seed to the top portion of the assembly in the target orientation.
9. The assembly of clause 1, comprising a dispensing guide disposed below the bottom portion, the dispensing guide operably receiving the oriented seed from the bottom portion, and releasing the oriented seed in the target orientation to the ground.
10. The assembly of clause 9, the dispensing guide comprising a channel that is configured to maintain the target orientation of the oriented seed from the bottom portion to the ground.
11. The assembly of clause 1, the first belt comprising pre-formed cells shaped and sized to receive the oriented seed and maintain the target orientation during translation from the top portion to the bottom portion.
12. A seed delivery system for delivering an oriented seed for planting, comprising:
   a seed meter that individualizes and orients a seed resulting in an oriented seed in a target orientation; and
   a seed dispensing assembly comprising a top portion and a bottom portion, the seed dispensing assembly further comprising:
      a first belt disposed downstream from the seed meter and comprising an inner portion operably moving downward, the inner portion operably receiving and engaging the oriented seed at the top portion and translating the oriented seed to the bottom portion where it is ejected in target orientation;
      a first powered roller engaged with the first belt, the powered roller driving the first belt translation; and
      a first non-powered roller or guide engaged with the first belt and operably providing tension to the first belt as it translates.
13. The system of clause 12, the seed dispensing assembly further comprising a second belt comprising an inner portion operably moving downward, the inner portion of the first belt proximate the inner portion of the second belt such that the oriented seed is received and held between the first belt and second belt as the oriented seed is translated to the bottom portion.
14. The system of clause 13, comprising a second powered roller engaged with the second belt, the powered roller driving the second belt translation; and comprising a second non-powered roller or guide engaged with the second belt and operably providing tension to the second belt as it translates.
15. The system of clause 14, wherein the first powered roller and the second powered roller rotate in opposite directions, and rotate at substantially a same speed.
16. The system of clause 12, comprising a dispensing wall adjacent to the inner portion of the first belt such that the oriented seed is received and held between the first belt and dispensing wall as the oriented seed is translated to the bottom portion.
17. The system of clause 12, the first belt comprising a groove disposed along a central line of the first belt, the groove configured to receive at least a portion the oriented seed to hold the oriented seed during translation to the bottom portion.
18. The system of clause 12, comprising a chute disposed between the seed meter and the top portion, the chute configured to operably receive the oriented seed in the target orientation from the seed meter and deliver the oriented seed to the top portion of the seed dispensing assembly in the target orientation.
19. The system of clause 1, comprising a dispensing guide disposed below the bottom portion, the dispensing guide configured to operably receive the oriented seed from the bottom portion, and release the oriented seed in the target orientation to the ground.
20. A seed delivery system for delivering an oriented seed for planting, comprising:
   a seed meter that individualizes and orients a seed resulting in an oriented seed in a target orientation;
   a seed dispensing assembly comprising a top portion and a bottom portion, the seed dispensing assembly further comprising:
      a first belt disposed downstream from the seed meter and comprising an inner portion operably moving downward, the inner portion operably receiving and engaging the oriented seed at the top portion and translating the oriented seed to the bottom portion where it is ejected in target orientation;
      a first powered roller engaged with the first belt, the powered roller driving the first belt translation;
      a first non-powered roller or guide engaged with the first belt and operably providing tension to the first belt as it translates; and
      one of:
         a second belt comprising an inner portion operably moving downward, the inner portion of the first belt proximate the inner portion of the second belt such that the oriented seed is received and held between the first belt and second belt as the oriented seed is translated to the bottom portion; and
         a dispensing wall adjacent to the inner portion of the first belt such that the oriented seed is received and held between the first belt and dispensing wall as the oriented seed is translated to the bottom portion; and
   a dispensing guide disposed below the bottom portion, the dispensing guide configured to operably receive the oriented seed from the bottom portion, and release the oriented seed in the target orientation to the ground.

## Claims

1. A seed delivery assembly (300) for delivering an oriented seed for planting, comprising:
a top portion (312) and a bottom portion (314);
a first belt (302) comprising an inner portion operably moving downward, the inner portion operably configured to receive and engage an oriented seed in a target orientation at the top portion and translate the oriented seed to the bottom portion where it is ejected in the target orientation;
a first powered roller (304) engaged with the first belt, the powered roller driving the first belt translation; and
a first non-powered roller (306) or guide engaged with the first belt and operably providing tension to the first belt as it translates.

2. The assembly of claim 1, further comprising:
a second belt (302') comprising an inner portion operably moving downward, the inner portion of the first belt proximate the inner portion of the second belt such that the oriented seed is received and held between the first belt and second belt as the oriented seed is translated to the bottom portion;
a second powered roller (304') engaged with the second belt, the second powered roller driving the belt translation of the second belt; and
a second non-powered roller or guide engaged with the second belt and operably providing tension to the second belt as it translates,
wherein the first powered roller and the second powered roller rotate in opposite directions, and rotate at substantially a same speed.

3. The assembly of claim 2, the first and second belts respectively self-conforming to automatically adjust to seeds having different size dimensions.

4. The assembly of claim 1, comprising a dispensing wall adjacent to the inner portion of the first belt such that the seed is received and held between the first belt and dispensing wall as the seed is translated to the bottom portion.

5. The assembly of any one of the preceding claims, the first belt comprising a groove disposed along a central line of the first belt, the groove configured to receive at least a portion the seed to hold the oriented seed during translation to the bottom portion.

6. The assembly of any one of the preceding claims, comprising a chute disposed above the top portion, the chute configured to operably receive the oriented seed from a seed meter and deliver the oriented seed to the top portion of the assembly in the target orientation.

7. The assembly of any one of the preceding claims, comprising a dispensing guide disposed below the bottom portion, the dispensing guide operably receiving the oriented seed from the bottom portion, and releasing the oriented seed in the target orientation to the ground.

8. The assembly of claim 7, the dispensing guide comprising a channel that is configured to maintain the target orientation of the oriented seed from the bottom portion to the ground.

9. The assembly of any one of the preceding claims, the first belt comprising pre-formed cells shaped and sized to receive the oriented seed and maintain the target orientation during translation from the top portion to the bottom portion.

10. A seed delivery system (700) for delivering an oriented seed for planting, comprising:
a seed meter (752) that individualizes and orients a seed resulting in an oriented seed in a target orientation; and
a seed dispensing assembly (718) comprising a top portion and a bottom portion, the seed dispensing assembly further comprising:
a first belt (702) disposed downstream from the seed meter and comprising an inner portion operably moving downward, the inner portion operably receiving and engaging the oriented seed at the top portion and translating the oriented seed to the bottom portion where it is ejected in target orientation;
a first powered roller (704) engaged with the first belt, the powered roller driving the first belt translation; and
a first non-powered roller (1620) or guide engaged with the first belt and operably providing tension to the first belt as it translates.

11. The system of claim 10, the seed dispensing assembly further comprising:
a second belt comprising an inner portion operably moving downward, the inner portion of the first belt proximate the inner portion of the second belt such that the oriented seed is received and held between the first belt and second belt as the oriented seed is translated to the bottom portion;
a second powered roller engaged with the second belt, the powered roller driving the second belt translation; and
a second non-powered roller or guide engaged with the second belt and operably providing tension to the second belt as it translates,
wherein the first powered roller and the second powered roller rotate in opposite directions, and rotate at substantially a same speed.

12. The system of claim 10, comprising a dispensing wall adjacent to the inner portion of the first belt such that the oriented seed is received and held between the first belt and dispensing wall as the oriented seed is translated to the bottom portion.

13. The system of any one of claims 10 to 12, the first belt comprising a groove disposed along a central line of the first belt, the groove configured to receive at least a portion the oriented seed to hold the oriented seed during translation to the bottom portion.

14. The system of any one of claims 10 to 13, comprising a chute disposed between the seed meter and the top portion, the chute configured to operably receive the oriented seed in the target orientation from the seed meter and deliver the oriented seed to the top portion of the seed dispensing assembly in the target orientation.

15. The system of any one of claims 10 to 14, comprising a dispensing guide disposed below the bottom portion, the dispensing guide configured to operably receive the oriented seed from the bottom portion, and release the oriented seed in the target orientation to the ground.
